# FASCICULE DE BREVET EUROPEEN

(11) **EP 1 100 323 B1**
(45) Date de publication et mention de la délivrance du brevet: **16.10.2002**
(21) Numéro de dépôt: 99934811.3
(22) Date de dépôt: 29.07.1999
(51) Int. Cl.: A01K 61/02

(54) **PROCEDE DE NOURRISSAGE D'ANIMAUX AQUATIQUES**
VERFAHREN ZUR FÜTTERUNG VON WASSERTIEREN
METHOD FOR FEEDING AQUATIC ANIMALS

(30) Priorité: 30.07.1998 FR 9809768
(43) Date de publication de la demande: 23.05.2001
(73) Titulaire: CENTRE NATIONAL DE LA RECHERCHE SCIENTIFIQUE (CNRS), 75794 Paris Cedex 16 (FR)
(72) Inventeur: LAGARDERE, Jean-Paul, F-17138 Saint Xandre (FR); MALLEKH, Ridha, F-17000 La Rochelle (FR)
(74) Mandataire: Callon de Lamarck, Jean-Robert
(86) Numéro de dépôt international: FR9901877
(87) Numéro de publication internationale: WO00005944

(56) Documents cités:
- WO-A-92/12628
- WO-A-96/15663
- PATENT ABSTRACTS OF JAPAN vol. 098, no. 004, 31 mars 1998 (1998-03-31) & JP 09 329482 A (MARINE SYST:KK), 22 décembre 1997 (1997-12-22)
- PATENT ABSTRACTS OF JAPAN vol. 1999, no. 03, 31 mars 1999 (1999-03-31) & JP 10 313730 A (HITACHI LTD;NIPPON SUISAN KAISHA LTD), 2 décembre 1998 (1998-12-02)

## Description

L'invention concerne le domaine de l'aquaculture. Plus précisément, il s'agit d'un procédé de nourrissage pour animaux aquatiques, tels que des poissons. Plus précisément encore, il s'agit d'un procédé pour régler l'apport de nourriture à ces animaux aquatiques, en fonction de leurs besoins alimentaires.

On connaît déjà plusieurs types de procédés visant à réguler l'apport de nourriture à des poissons en fonction de leurs besoins.

Selon l'un de ces types, la distribution de nourriture se fait conformément à des tables de rationnement ou des abaques, qui indiquent les besoins alimentaires des poissons. Mais ce type de méthode ne prend pas en compte les variations du comportement alimentaire des poissons qui peut dépendre de nombreux facteurs, tels que la température, leur état de stress, la teneur en oxygène de l'eau, etc.

Selon un deuxième type, la distribution d'aliments se fait à la demande du poisson grâce à un système sollicité directement par celui-ci lorsqu'il a faim, par exemple par des coups de museaux sur une tige tactile. Cependant la sollicitation de la tige tactile peut intervenir par jeu ou par accident lié à une densité importante de poissons au voisinage de la tige.

Selon un troisième type, les éleveurs déterminent par observation visuelle si les poissons s'alimentent ou pas et conditionnent la distribution de nourriture à cette observation. Mais il n'est pas facile de déterminer visuellement si le poisson mange et cela pour plusieurs raisons :
- tout d'abord le grand nombre de poissons par bassin ne permet pas toujours une vision des granulés dans l'eau ;
- la qualité de l'eau n'est pas toujours égale: dès que l'eau se trouble, il est très difficile d'observer les poissons ;
- dans le cas de poissons benthiques, c'est à dire des poissons qui ont tendance à rester au fond, ceux-ci ne remontent pas toujours à la surface pour prendre les granulés.

Selon un quatrième type, décrit par le document WO/92 12 628 A, la surveillance du nourrissage de poissons est réalisée grâce à un sonar avec écho sur les particules de nourriture tombant au dessous d'une zone de surface et alors considérées comme non ingérées par les poissons. Ce système n'est utilisable que pour des poissons se nourrissant en surface.

De plus, il nécessite une hauteur d'eau de plusieurs mètres, ce qui est difficilement compatible avec l'utilisation de ce type de procédés dans des bassins artificiels en béton.

Selon un cinquième type, décrit par le document WO 96/15 663, la surveillance du nourrissage de poissons est également réalisée grâce à un sonar avec écho sur les particules de nourriture, avec mesure de l'effet Doppler des particules alimentaires sombrant.

Un but de l'invention est de fournir un procédé pour ajuster la distribution d'aliments aux poissons, à leur consommation effective par ceux-ci, qui ne présente pas les inconvénients des procédés de l'art antérieur mentionnés ci-dessus.

Ce but est atteint grâce à un procédé de nourrissage d'animaux aquatiques du type défini en revendication 1 annexée.

Un tel signal de prise alimentaire indique que les poissons se nourrissent effectivement. La mesure de ce signal, par exemple la mesure de son amplitude, donne un résultat élevé lorsque de nombreux poissons se nourrissent. Le résultat de cette mesure diminue lorsque les poissons se nourrissant sont moins nombreux.

L'asservissement de la distribution de nourriture au résultat de cette mesure permet donc d'ajuster la distribution aux besoins réels et ainsi éviter un gaspillage, ceci, sans pénaliser la demande exprimée par les poissons.

Le procédé selon l'invention présente, par rapport à l'art antérieur, les avantages suivants :
- il est uniquement fondé sur le bruit d'aspiration d'un granulé d'aliment par le poisson ; il s'agit donc d'une source d'émission transitoire formée d'une série d'impulsions brèves (5 à 10 ms) dont le nombre est proportionnel au nombre des poissons capturant des granulés ; ce bruit d'aspiration qui s'apparente à un crépitement, excite une bande de fréquences très large de 1000 à 20 000 Hz, voire au delà ;
- il utilise comme bande d'écoute active, la bande de fréquences de 6 à 9 kHz ; ce choix permet de s'affranchir de deux types de pollutions sonores fréquentes dans les élevages artificiels : les bruits de l'environnement d'un élevage artificiel en bassin en béton (aérateurs, pompes, surverses, etc.) et le bruit impact du granulé à la surface de l'eau ;
- il est donc adapté à des systèmes d'élevage en bassin béton et à toutes les espèces qui captent leurs proies par aspiration ; et
- il évite le recours à l'écoute des bruits de nage car ils sont pratiquement indécelables dans des conditions d'élevage intensif à terre, et plus généralement, car ils ne sont pas strictement des indicateurs d'une prise alimentaire réelle.

D'autres aspects, buts et avantages apparaîtront à la lecture de la description détaillée qui suit. L'invention sera aussi mieux comprise à l'aide des dessins sur lesquels :
- la figure 1 est une représentation graphique des transformées de Fourier de signaux acoustiques enregistrés dans un bassin d'élevage de turbots ;

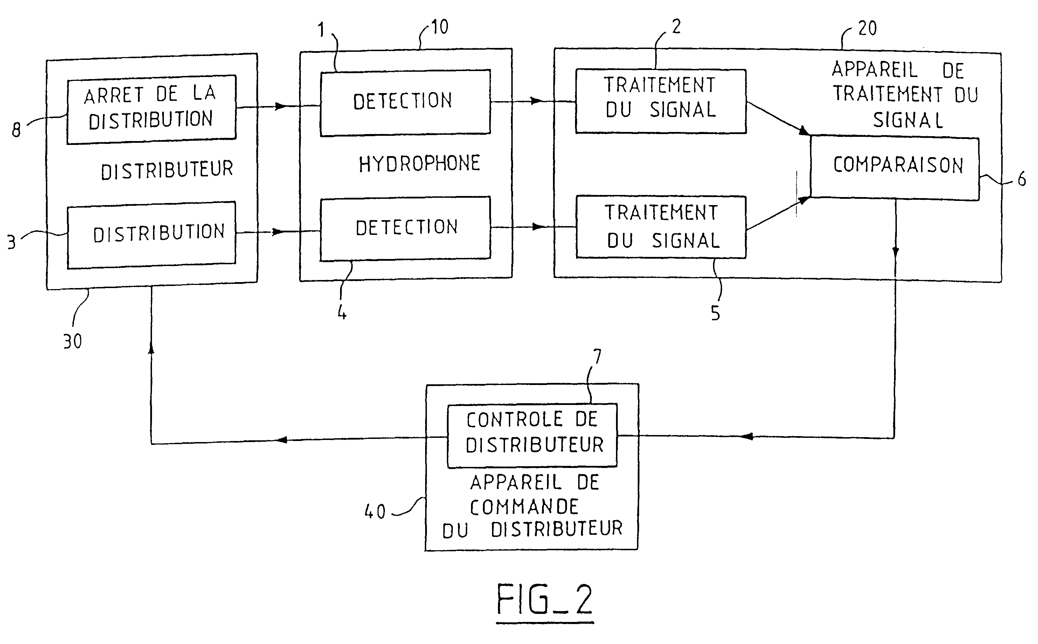

- la figure 2 représente un schéma de l'ensemble des différentes étapes d'un exemple de mise en oeuvre du procédé selon l'invention ;
- la figure 3 représente schématiquement la chaîne de traitement du signal mesuré lors de la mise en oeuvre d'un exemple particulier de procédé selon l'invention ;
- la figure 4 représente l'activité de la prise alimentaire de turbots, mesurée en fonction du temps, grâce à un procédé conforme à la présente invention ; et
- la figure 5 représente l'évolution, sur un mois, des apports journaliers d'aliments suivant un procédé de nourrissage conforme à la présente invention et selon un procédé de nourrissage traditionnel.

L'invention est décrite ci-dessous dans son utilisation, particulière mais non limitative, pour le nourrissage des turbots (*Scophtalmus Maximus*) dans des fermes aquacoles.

Dans ce type de fermes, les poissons sont nourris par la distribution de granulés.

B. Bordeau (« Influences de l'environnement acoustique sur les poissons marins et continentaux - Applications aux pêches », thèse de docteur du 3^{ème} cycle, Université Paris VI, 1982) décrit de nombreux cas de poissons qui émettent des signaux acoustiques lorsqu'ils mangent des granulés, soit par stridulation masticatoire, soit claquement de capture.

Ces signaux acoustiques ont des fréquences généralement situées entre 1 et 10 kHz. Plus précisément, dans le cas des turbots, il a été observé par le Demandeur que les gros turbots émettent ces signaux, caractéristiques de leur prise alimentaire, entre 2 et 10 kHz, tandis que les petits les émettent plutôt entre 3 et 9 kHz. Il a aussi été observé par le Demandeur que l'amplitude de ces signaux varie en fonction du nombre de poissons se nourrissant.

Le procédé selon l'invention peut comprendre plusieurs étapes préliminaires.

Ces étapes préliminaires peuvent être, par exemple :
- une étape de détermination de la bande de fréquence dans laquelle la dynamique du signal est la meilleure pendant toute la durée de la détection ; en effet d'une part, cette bande de fréquence dépend du type d'animal aquatique faisant l'objet de l'élevage, des conditions d'élevage, etc., et d'autre part, le signal décroît au cours du temps et excite une bande de fréquence de plus en plus réduite ;
- éventuellement aussi, une étape consistant à vérifier que la densité de poissons dans un bassin n'influence pas la fréquence du bruit généré par la prise alimentaire individuelle et ne modifie pas le signal de la prise alimentaire ramené à un seul poisson ; et
- une étape de détermination de l'amplitude seuil du signal acoustique en dessous de laquelle on peut considérer que ces animaux aquatiques sont suffisamment nourris pour arrêter leur nourrissage.

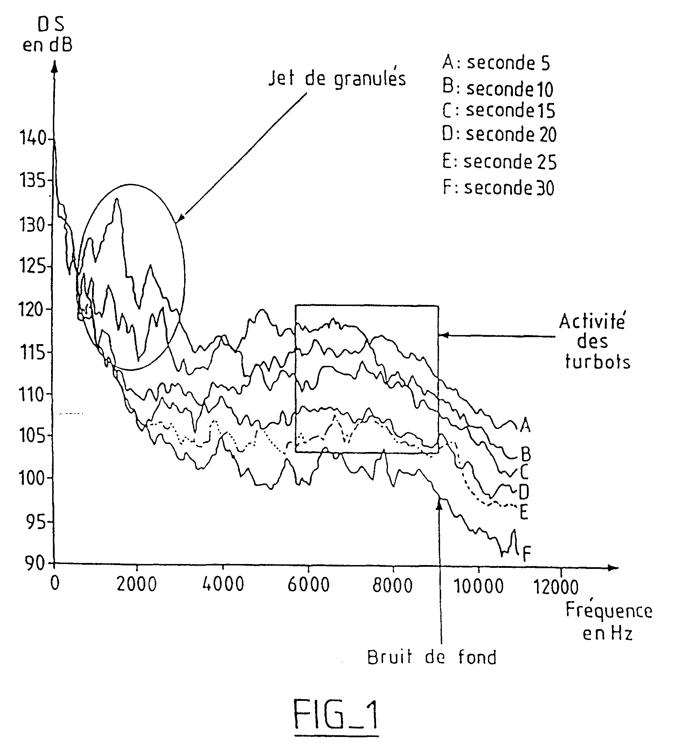

La détermination de la bande de fréquence dans laquelle les poissons émettent un signal acoustique pendant leur prise d'aliments peut être réalisée en mesurant le signal acoustique en fonction du temps, dans un bassin d'élevage pendant une période de temps durant laquelle les poissons s'alimentent, puis en réalisant une première transformée de Fourier de ce signal. Il apparaît alors dans la transformée de Fourier des pics. Pour identifier la nature de ces pics, on peut refaire la même mesure pendant que les poissons ne s'alimentent pas. En réalisant une deuxième transformée de Fourier de ce signal et en comparant les deux transformées de Fourier, on en déduit que les pics ayant disparu dans la deuxième transformée de Fourier correspondent aux bruits caractéristiques de la prise alimentaire des poissons. Le bullage dans le bassin peut éventuellement être arrêté au cours de mesures de ce type pour identifier la gamme des fréquences perturbées par cette méthode d'aération. Un exemple de telles transformées de Fourier est illustré par la figure 1. Cette figure représente l'amplitude DS (densité spectrale) des transformées de Fourier en fonction de la fréquence de différents signaux enregistrés à différents moments du nourrissage. La distribution des granulés dure une dizaine de secondes (Courbes A et B). Trente secondes après le début du nourrissage, pratiquement tous les poissons ont cessé de se nourrir (courbe F). On n'observe alors plus qu'un bruit de fond. Outre, la forte dynamique aux alentours de 1 à 2 kHz qui correspond au bruit d'impact des granulés sur l'eau, on observe une forte dynamique entre 6 et 9 kHz. Cette dernière plage de fréquence correspond aux bruits générés par l'activité de prise alimentaire des turbots.

Après ces opérations préliminaires, peut commencer une mise en oeuvre routinière du procédé selon l'invention.

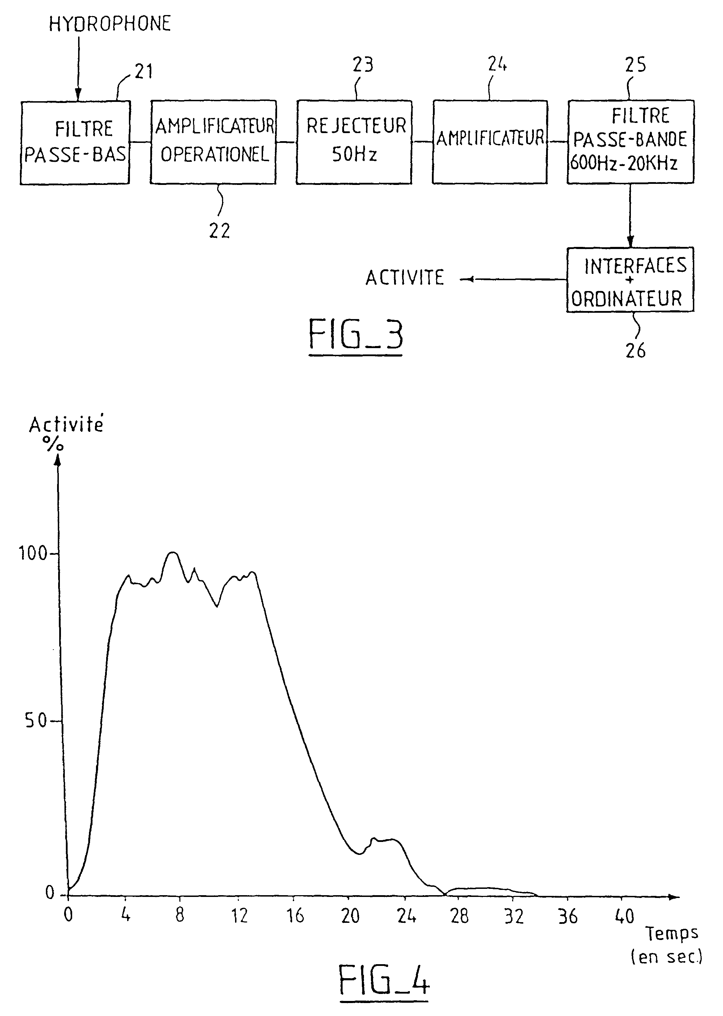

La figure 3 illustre, par un schéma général, l'ensemble des opérations de routine d'un exemple de mise en oeuvre du procédé selon l'invention.

Selon cet exemple de mise en oeuvre du procédé selon l'invention, celui-ci peut comprendre plusieurs étapes se succédant chronologiquement de la manière décrite ci-dessous.

Une première étape 1 consiste à effectuer une détection du bruit de fond du bassin d'élevage des poissons, à l'aide d'un hydrophone 10, sur un intervalle de temps pendant lequel la distribution de nourriture est arrêtée.

Une deuxième étape 2 consiste à traiter ce signal correspondant au bruit de fond à l'aide d'un appareil de traitement du signal 20.

Une troisième étape 3 consiste à déclencher la distribution de la nourriture aux poissons à l'aide d'un distributeur 30.

Une quatrième étape 4 consiste à détecter le signal de la prise alimentaire des poissons, à l'aide de l'hydrophone 10.

Une cinquième étape 5 consiste à traiter ce signal de prise alimentaire, à l'aide de l'appareil de traitement du signal 20.

Une sixième étape 6 consiste à comparer le signal de prise alimentaire au signal provenant du bruit de fond, à l'aide de l'appareil de traitement du signal 20.

Une septième étape 7 consiste à contrôler automatiquement la distribution 30, à l'aide d'un appareil de commande d'un distributeur 40, en fonction du rapport signal de prise alimentaire sur bruit de fond, déterminé par l'appareil de traitement du signal 20.

Une huitième étape 8 consiste à arrêter la distribution de nourriture par le distributeur 30, lorsque ce rapport signal de prise alimentaire sur bruit de fond se situe en dessous d'une amplitude seuil.

Préférentiellement, les deuxième et cinquième étapes 2 et 5 de traitement du signal provenant de l'hydrophone, consistent à faire subir à ce signal l'ensemble des opérations représentées sur la figure 3.

Un premier filtre Passe-Bas 21 est indispensable pour ôter du signal, certaines composantes de très basse fréquence, comme le simple mouvement de l'eau (la houle), qui saturerait l'étape d'amplification dès l'entrée du signal.

Une adaptation d'impédance grâce à un premier amplificateur opérationnel 22 est nécessaire pour ne pas perturber le signal provenant de l'hydrophone, avec le reste des éléments de la chaîne d'amplification.

Un réjecteur 23 de cinquante Hertz peut être utile pour épurer le signal des parasites provenant de machines électriques présentes dans l'environnement de la mesure.

Un amplificateur 24 permet alors d'amplifier le signal à mesurer, avant d'isoler dans le spectre acoustique la partie dans laquelle se situent les fréquences caractéristiques de la prise alimentaire, grâce à un filtre 25 Passe-Bande 600 Hz-20 kHz, par exemple.

Un système 26 composé d'un ordinateur et des interfaces nécessaires permet de réaliser un traitement numérique du signal provenant de l'hydrophone 10 et de moyenner ce signal. En effet, le signal mesuré correspond à l'activité instantanée des poissons et présente beaucoup de variations. Le calcul de cette moyenne prenant du temps, il est nécessaire de ne pas augmenter trop le nombre de valeurs instantanées utilisées pour l'effectuer, car un décalage temporel s'ensuit qui retarde la décision sur l'arrêt de la distribution de nourriture. L'amplitude du signal acoustique mesurée pendant la distribution de nourriture et moyennée est comparée à l'amplitude provenant du bruit de fond, afin de calculer l'activité de prise alimentaire des poissons. Ce bruit de fond, par contre, est mesuré sur un intervalle de temps pendant lequel la distribution de nourriture est arrêtée, par exemple, au cours des étapes 1 et 2, préalablement au début du nourrissage. L'activité de prise alimentaire est alors représentée par un pourcentage relatif. Un exemple de représentation graphique de cette activité pendant une séance de nourrissage d'un bassin d'élevage de poissons est donné à la figure 4.

Lorsque l'activité décroît en dessous d'une valeur seuil, un ordre est envoyé à l'appareil de commande 40 du distributeur 30 pour que celui-ci arrête la distribution de nourriture.

Ces dernières étapes 7 et 8 peuvent être remplacées par un contrôle manuel. En effet, l'appareil de traitement du signal 20 peut être muni d'un indicateur, visuel ou sonore par exemple, de l'activité qui permet à l'éleveur d'arrêter lui-même la distribution d'aliments.

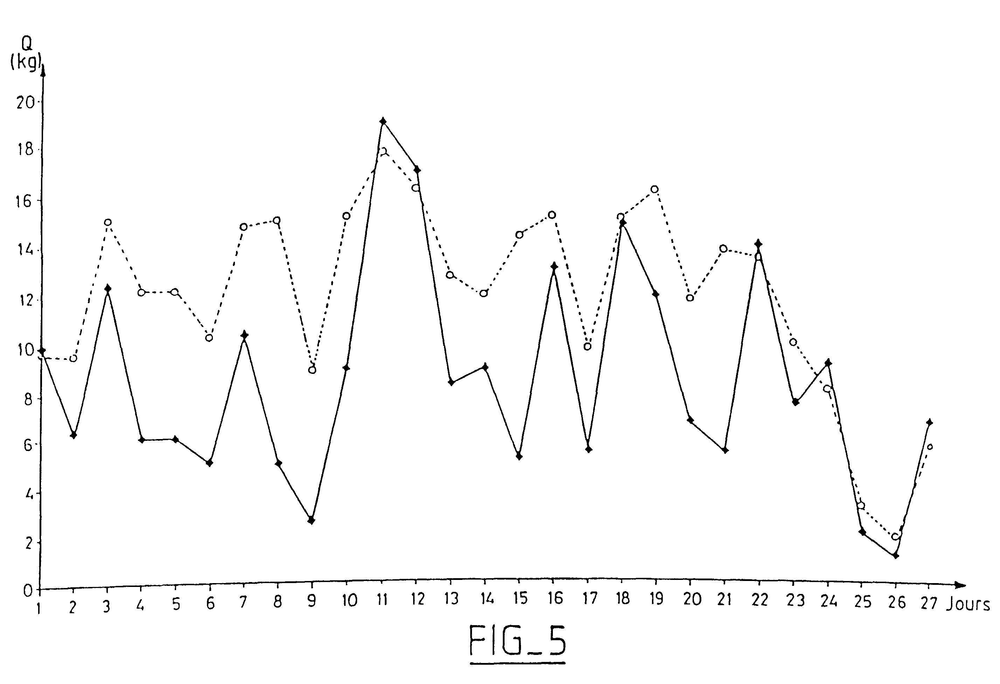

La figure 5 montre l'évolution sur un mois des quantités Q journalières de nourriture distribuées à des turbots dans un bassin d'élevage, suivant un procédé de nourrissage traditionnel (courbe a) et selon un procédé conforme à l'invention (courbe b). Le procédé de nourrissage traditionnel utilisé ici consiste à distribuer de la nourriture manuellement en observant la prise alimentaire des poissons et en arrêtant la distribution lorsque la prise alimentaire est estimée visuellement suffisamment basse. Le procédé de nourrissage selon l'invention utilisé ici consiste aussi à distribuer de la nourriture manuellement, mais à arrêter la distribution lorsqu'une alarme est déclenchée par l'appareil de traitement du signal 20 au moment où l'activité de prise alimentaire des poissons passe en dessous de la valeur seuil.

L'utilisation du procédé selon l'invention a permis, dans le cas illustré par la figure 5, de réaliser une économie de 25% par rapport à la quantité Q de nourriture distribuée traditionnellement.

Dans l'exemple de procédé selon l'invention décrit ci-dessus, l'étape d'asservissement consiste à mesurer l'amplitude du signal pendant l'étape 3 de distribution de nourriture acoustique et mettre fin à cette étape 3 lorsque l'amplitude du signal acoustique passe en dessous d'une amplitude seuil déterminée pour économiser la quantité de nourriture sans pénaliser la demande alimentaire exprimée par les poissons. Mais il peut être envisagé de nombreuses autres variantes.

Ainsi, au lieu de mesurer l'amplitude du signal acoustique, on peut détecter la signature acoustique de la prise alimentaire. Au lieu d'un détecteur d'amplitude comme celui décrit ci-dessus, on peut utiliser un détecteur de signature acoustique. Ce détecteur peut utiliser des méthodes de comparaison de spectre ou des méthodes de traitement du signal, dérivées de celles employées dans la reconnaissance vocale, basées sur des approches stastistiques. Parmi ces types d'approches figurent des solutions à bases de réseaux de neurones ou des modèles de Markov cachés (Hidden Markov Modeles).

Dans le cas où l'on utilise un détecteur de signature acoustique, l'étape d'asservissement consiste à opérer une détection de la signature acoustique de la prise alimentaire pour déterminer le nombre de poissons se nourrissant pendant l'étape de distribution de nourriture et à mettre fin à cette étape, lorsque le nombre de poissons se nourrissant, ainsi déterminé, passe en dessous d'un nombre seuil déterminé pour économiser la quantité de nourriture distribuée, sans pénaliser la demande alimentaire exprimée par les animaux.

Le procédé peut aussi être utilisé dans l'asservissement de la prise alimentaire, par arrêt automatique de celle-ci, pour des espèces de poissons élevées en cages offshores immergées, ou en cages flottantes à distribution d'aliment par air pulsé, ou pour tous modules d'élevage intensif en eau recyclée ou non.

Le procédé peut également servir de détecteur acoustique permettant de vérifier l'ingestion de granulés aux antibiotiques lors des traitements de certaines pathologies.

Selon un autre procédé de mise en oeuvre du procédé selon l'invention, la quantité instantanée de nourriture distribuée peut aussi être directement corrélée à l'amplitude instantanée de l'activité de prise alimentaire des animaux aquatiques.

Selon encore une autre variante, le procédé conforme à la présente invention comprend une étape consistant à discriminer les signaux générés par des animaux de poids différents.

## Revendications

1. Procédé de nourrissage d'animaux aquatiques comprenant une étape (3) de distribution de nourriture, et une étape d'asservissement de la distribution de nourriture à la mesure d'un signal **caractérisé par le fait que** ledit signal est un signal acoustique caractéristique de la prise alimentaire, c'est à dire, émis par ces animaux et correspondant à leur ingestion ou tentative d'ingestion d'aliments.

2. Procédé selon la revendications 1, **caractérisé par le fait qu'**il comprend une étape de détermination d'une amplitude seuil du signal acoustique en dessous de laquelle on peut considérer que les animaux aquatiques sont suffisamment nourris pour arrêter leur nourrissage.

3. Procédé selon la revendication 2, **caractérisé par le fait que** l'étape d'asservissement consiste à mesurer l'amplitude du signal pendant l'étape (3) de distribution de nourriture et mettre fin à cette étape (3), lorsque l'amplitude du signal acoustique passe en dessous de l'amplitude seuil, déterminée pour économiser la quantité de nourriture distribuée, sans pénaliser la demande alimentaire exprimée par les animaux.

4. Procédé selon l'une des revendications précédentes, **caractérisé par le fait qu'**il comprend une étape de détermination de la bande de fréquence dans laquelle la dynamique du signal acoustique est la meilleure.

5. Procédé selon l'une des revendications précédentes, **caractérisé par le fait qu'**il comprend une étape consistant à filtrer le signal acoustique à l'aide d'un filtre Passe-Bande (25) permettant d'isoler la partie du spectre acoustique dans laquelle se situent les fréquences caractéristiques de la prise alimentaire.

6. Procédé selon l'une des revendications précédentes, **caractérisé par le fait qu'**il comprend une étape consistant à mesurer l'amplitude du bruit de fond sur un intervalle de temps pendant lequel la distribution de nourriture est arrêtée, pour comparer l'amplitude du signal acoustique mesuré pendant la distribution de nourriture, à l'amplitude de ce bruit de fond.

7. Procédé selon l'une des revendications précédentes, **caractérisé par le fait que** la quantité instantanée de nourriture distribuée est corrélée à l'amplitude de l'activité instantanée de prise alimentaire des animaux aquatiques.

8. Procédé selon l'une des revendications précédentes, **caractérisé par le fait qu'**il comprend une étape consistant à discriminer les signaux générés par des animaux de poids différents.

9. Procédé selon l'une des revendications précédentes, **caractérisé par le fait qu'**il est utilisé pour surveiller le nourrissage de poissons.

10. Procédé selon la revendication 9, **caractérisé par le fait qu'**il comprend une étape consistant à vérifier que la densité des poissons à nourrir n'influence pas la fréquence du bruit généré par la prise alimentaire individuelle.

11. Procédé selon l'une des revendications 9 et 10, **caractérisé par le fait que** l'étape d'asservissement consiste à opérer une détection de la signature acoustique de la prise alimentaire pour déterminer le nombre de poissons se nourrissant pendant l'étape (3) de distribution de nourriture et à mettre fin à cette étape (3), lorsque le nombre de poissons se nourissant, ainsi déterminé, passe en dessous d'un nombre seuil déterminé pour économiser la quantité de nourriture distribuée, sans pénaliser la demande alimentaire exprimée par les animaux.

12. Procédé selon l'une des revendications 9 à 11, **caractérisé par le fait qu'**il comprend une étape consistant à vérifier que la densité des poissons ne modifie pas le signal de la prise alimentaire ramené à un seul poisson.

13. Dispositif de détection acoustique pour la mise en oeuvre du procédé selon l'une des revendications précédentes, comprenant un hydrophone (10) et un appareil de traitement du signal (20) acoustique détecté par l'hydrophone (10), **caractérisé par le fait qu'**il est apte à extraire du bruit un signal émis par les animaux aquatiques et caractéristique de la prise alimentaire de ceux-ci, c'est à dire correspondant à leur ingestion d'aliments.

14. Dispositif selon la revendication 13, **caractérisé par le fait qu'**il comprend en outre des moyens de contrôle automatique de la distribution de nourriture, en fonction du signal traité par l'appareil de traitement (20).

15. Dispositif selon l'une des revendications 13 et 14, **caractérisé par le fait que** l'appareil de traitement du signal (20) comprend un système (26) pour réaliser un traitement numérique du signal provenant de l'hydrophone (10).

16. Dispositif selon l'une des revendications 13 à 15, **caractérisé par le fait que** l'appareil de traitement du signal (20) comprend un amplificateur (24) du signal provenant de l'hydrophone (10).

17. Dispositif selon l'une des revendications 13 à 16, **caractérisé par le fait qu'**il comprend un détecteur de signature acoustique.

## Claims

1. Process for feeding aquatic animals comprising a step (3) of dispensing feed and a step of slaving the dispensing of feed to the measurement of a signal, **characterized in that** the said signal is an acoustic signal characteristic of the food uptake, that is to say, emitted by these animals and corresponding to their ingestion or attempted ingestion of food.

2. Process according to Claim 1, **characterized in that** it comprises a step of determining a threshold amplitude of the acoustic signal, below which it may be regarded that the aquatic animals are fed sufficiently to halt their feeding.

3. Process according to Claim 2, **characterized in that** the slaving step consists in measuring the amplitude of the signal during the feed dispensing step (3) and in ending this step (3), when the amplitude of the acoustic signal passes below the threshold amplitude, determined so as to economize on the quantity of feed dispensed, without penalizing the food demand expressed by the animals.

4. Process according to one of the preceding claims, **characterized in that** it comprises a step of determining the frequency band in which the dynamic range of the acoustic signal is best.

5. Process according to one of the preceding claims, **characterized in that** it comprises a step consisting in filtering the acoustic signal with the aid of a bandpass filter (25) making it possible to isolate that part of the acoustic spectrum containing the frequencies characteristic of the food uptake.

6. Process according to one of the preceding claims, **characterized in that** it comprises a step consisting in measuring the amplitude of the background noise over a time interval during which the dispensing of feed is halted, so as to compare the amplitude of the acoustic signal measured during the dispensing of feed, with the amplitude of this background noise.

7. Process according to one of the preceding claims, **characterized in that** the instantaneous quantity of feed dispensed is correlated with the amplitude of the instantaneous activity of food uptake of the aquatic animals.

8. Process according to one of the preceding claims, **characterized in that** it comprises a step consisting in discriminating the signals generated by animals of different weights.

9. Process according to one of the preceding claims, **characterized in that** it is used to monitor the feeding of fish.

10. Process according to Claim 9, **characterized in that** it comprises a step consisting in verifying that the density of the fish to be fed does not influence the frequency of the noise generated by the individual food uptake.

11. Process according to one of Claims 9 and 10, **characterized in that** the slaving step consists in effecting a detection of the acoustic signature of the food uptake so as to determine the number of fish feeding during the feed dispensing step (3) and in ending this step (3), when the number of fish feeding, thus determined, passes below a threshold number determined so as to economize on the quantity of feed dispensed, without penalizing the food demand expressed by the animals.

12. Process according to one of Claims 9 to 11, **characterized in that** it comprises a step consisting in verifying that the density of fish does not modify the food uptake signal referred to a single fish.

13. Acoustic detection device for implementing the process according to one of the preceding Claims, comprising a hydrophone (10) and an apparatus for processing the acoustic signal (20) detected by the hydrophone (10), **characterized in that** it is able to extract from the noise a signal emitted by the aquatic animals and characteristic of their food uptake, that is to say corresponding to their ingestion of food.

14. Device according to claim 13, **characterized in that** it furthermore comprises means of automatic control of the dispensing of feed, as a function of the signal processed by the processing apparatus (20).

15. Device according to one of claims 13 and 14, **characterized in that** the apparatus for processing the signal (20) comprises a system (26) for carrying out digital processing of the signal originating from the hydrophone (10).

16. Device according to one of claims 13 to 15, **characterized in that** the apparatus for processing the signal (20) comprises an amplifier (24) of the signal originating from the hydrophone (10).

17. Device according to one of claims 13 to 16, **characterized in that** it comprises an acoustic signature detector.

## Patentansprüche

1. Verfahren zur Fütterung von Meerestieren, umfassend einen Schritt (3) der Futterausgabe und einen Schritt der Steuerung der Futterausgabe entsprechend einem Signal, **dadurch gekennzeichnet, daß** das Signal ein akustisches Signal ist, welches für die Nahrungsaufnahme charakteristisch ist, das heißt, welches von den Tieren abgegeben wird und deren Aufnahme oder Versuch der Aufnahme von Nahrung entspricht.

2. Verfahren nach Anspruch 1, **dadurch gekennzeichnet, daß** es einen Schritt der Bestimmung einer Schwellenamplitude des akustischen Signals umfaßt, unterhalb der man die Wassertiere als ausreichend gefüttert ansehen kann, um deren Fütterung zu beenden.

3. Verfahren nach Anspruch 2, **dadurch gekennzeichnet, daß** der Schritt der Steuerung darin besteht, die Amplitude des Signals während des Schritts (3) der Futterausgabe zu messen und diesen Schritt (3) zu beenden, wenn die Amplitude des akustischen Signals die Amplitudenschwelle unterschreitet, die dazu bestimmt ist, ausgegebene Futtermenge zu sparen, ohne das durch die Tiere ausgedrückte Nahrungsbedürfnis zu benachteiligen.

4. Verfahren nach einem der vorhergehenden Ansprüche, **dadurch gekennzeichnet, daß** es einen Schritt der Bestimmung des Frequenzbandes umfaßt, in dem die Dynamik des akustischen Signals die beste ist.

5. Verfahren nach einem der vorhergehenden Ansprüche, **dadurch gekennzeichnet, daß** es einen Schritt umfaßt, der in einem Filtern des akustischen Signals mit Hilfe eines Bandpaßfilters (25) besteht, der ein Isolieren des Teils des akustischen Spektrums erlaubt, in dem die für die Nahrungsaufnahme charakteristischen Frequenzen liegen.

6. Verfahren nach einem der vorhergehenden Ansprüche, **dadurch gekennzeichnet, daß** es einen Schritt umfaßt, welcher in einem Messen der Amplitude des Grundgeräusches in einem Zeitintervall, während dessen die Ausgabe von Futter eingestellt ist, besteht, um die Amplitude des während der Ausgabe von Futter gemessenen akustischen Signals mit der Amplitude dieses Grundgeräusches zu vergleichen.

7. Verfahren nach einem der vorhergehenden Ansprüche, **dadurch gekennzeichnet, daß** die momentane Menge ausgegebenen Futters mit der Amplitude der momentanen Aktivität der Nahrungsaufnahme der Wassertiere korreliert ist.

8. Verfahren nach einem der vorhergehenden Ansprüche, **dadurch gekennzeichnet, daß** es einen Schritt umfaßt, der in einem Diskriminieren der von Tieren mit unterschiedlichen Gewichten erzeugten Signalen besteht.

9. Verfahren nach einem der vorhergehenden Ansprüche, **dadurch gekennzeichnet, daß** es zum Überwachen der Fütterung von Fischen angewendet wird.

10. Verfahren nach Anspruch 9, **dadurch gekennzeichnet, daß** es einen Schritt umfaßt, der in einem Verifizieren, daß die Dichte der zu fütternden Fische nicht die Frequenz des durch die individuelle Nahrungsaufnahme erzeugten Geräuschs beeinflußt, besteht.

11. Verfahren nach einem der Ansprüche 9 und 10, **dadurch gekennzeichnet, daß** der Schritt der Steuerung darin besteht, daß eine Detektion der akustischen Signatur der Nahrungsaufnahme zur Bestimmung der Zahl der während des Schrittes (3) der Futterausgabe nahrungsaufnehmenden Fische durchgeführt wird und dieser Schritt (3) beendet wird, wenn die Anzahl so bestimmter futteraufnehmender Fische eine Anzahlschwelle unterschreitet, die dazu bestimmt ist, ausgegebene Futtermenge zu sparen, ohne das durch die Tiere ausgedrückte Nahrungsbedürfnis zu benachteiligen.

12. Verfahren nach einem der Ansprüche 9 bis 11, **dadurch gekennzeichnet, daß** es einen Schritt umfaßt, der in einem Verifizieren, daß die Dichte der Fische nicht das auf einen einzelnen Fisch zurückzuführende Signal der Nahrungsaufnahme modifiziert, besteht.

13. Vorrichtung zur akustischen Detektion für die Durchführung des Verfahrens nach einem der vorhergehenden Ansprüche, umfassend ein Hydrophon (10) und eine Einrichtung zur Verarbeitung des von dem Hydrophon (10) detektierten akustischen Signals (20), **dadurch gekennzeichnet, daß** sie dazu geeignet ist, aus dem Geräusch ein Signal zu extrahieren, welches von den Wassertieren abgegeben wird und für deren Nahrungsaufnahme charakteristisch ist, das heißt, welches deren Aufnahme von Nahrung entspricht.

14. Vorrichtung nach Anspruch 13, **dadurch gekennzeichnet, daß** sie außerdem Mittel zur automatischen Steuerung der Futterausgabe in Abhängigkeit von dem von der Signalverarbeitungseinrichtung (20) verarbeiteten Signal umfaßt.

15. Vorrichtung nach einem der Ansprüche 13 und 14, **dadurch gekennzeichnet, daß** die Signalverarbeitungseinrichtung (20) ein System (26) zum Durchführen einer digitalen Verarbeitung des vom Hydrophon (10) stammenden Signals umfaßt.

16. Vorrichtung nach einem der Ansprüche 13 bis 15, **dadurch gekennzeichnet, daß** die Signalverarbeitungseinrichtung (20) einen Verstärker (24) des vom Hydrophon (10) stammenden Signals umfaßt.

17. Vorrichtung nach einem der Ansprüche 13 bis 16, **dadurch gekennzeichnet, daß** sie einen Detektor der akustischen Signatur umfaßt.
